# EUROPEAN PATENT APPLICATION

(11) **EP 2 783 806 A2**
(43) Date of publication of application: **01.10.2014**
(21) Application number: 14157571.2
(22) Date of filing: 04.03.2014
(51) Int. Cl.: B25J 9/16

(54) **Robot system, calibration method, and method for producing to-be-processed material**

(30) Priority: 15.03.2013 JP 2013053524
(71) Applicant: Kabushiki Kaisha Yaskawa Denki, Kitakyushu-shi, Fukuoka 806-0004 (JP)
(72) Inventor: Nagai, Ryoichi, Kitakyushu-shi, Fukuoka 806-0004 (JP); Nakamura, Tamio, Kitakyushu-shi, Fukuoka 806-0004 (JP); Kouno, Dai, Kitakyushu-shi, Fukuoka 806-0004 (JP); Izumi, Tetsuro, Kitakyushu-shi, Fukuoka 806-0004 (JP)
(74) Representative: Viering, Jentschura & Partner Patent- und Rechtsanwälte

(57) **Abstract**

A robot system 1 includes a robot 10, a tool 102, a control device 113, a work table 30, a calibration jig 50, 53, a detector 112, and a calibrator 112. The tool 102 is mounted to a distal end of the robot 10 and includes a first plane and a second plane orthogonal to each other. The control device 113 controls the robot 10. On the work table 30, the robot 10 works. The calibration jig 50, 53 is fixed to the work table 30. The detector 112 detects a reference position determined by pressing the first plane and the second plane of the tool 102 against at least one of the jig 50, 53 and the work table 30. The calibrator 112 calibrates, based on the reference position, coordinates of the robot 10 to be used by the control device 113.

## Description

### BACKGROUND

### FIELD OF THE INVENTION

The present invention relates to a robot system, a calibration method, and a method for producing a to-be-processed material.

### DISCUSSION OF THE BACKGROUND

Japanese Unexamined Patent Application Publication No. 11-156764 discloses a method for calibrating a coordinate system of a robot. A robot system disclosed in Japanese Unexamined Patent Application Publication No. 11-156764 includes a robot that is self-movable to a work table. When the robot reaches the work table, an image capture device of the robot captures an image of a reference point set on the work table to calculate amounts of displacement between the coordinate system of the robot at teaching time and the coordinate system of the robot after the robot has stopped. Then, based on the amounts of displacement, the robot system corrects the displacement.

The contents of Japanese Unexamined Patent Application Publication No. 11-156764 are incorporated herein by reference in their entirety.

Unfortunately, the method disclosed in Japanese Unexamined Patent Application Publication No. 11-156764 may not always provide accurate calibration of the displacement. For example, depending on the environment, an image sensor may not be able to recognize the reference point. In this technical field, there is a need for a robot system, a calibration method, and a method for producing a to-be-processed material utilizing the calibration method that ensure stable calibration of the coordinate system of a robot.

According to one aspect of the present invention, a robot system 1 includes a robot 10, a tool 102, a control device 113, a work table 30, a calibration jig 50, 53, a detector 112, and a calibrator 112. The tool 102 is mounted to a distal end of the robot 10 and includes a first plane and a second plane orthogonal to each other. The control device 113 is configured to control the robot 10. On the work table 30, the robot 10 is configured to work. The calibration jig 50, 53 is fixed to the work table 30. The detector 112 is configured to detect a reference position determined by pressing the first plane and the second plane of the tool 102 against at least one of the jig 50, 53 and the work table 30. The calibrator 112 is configured to calibrate, based on the reference position, coordinates of the robot 10 to be used by the control device 113.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a schematic side view of a robot system according to a first embodiment;
FIG. 2 is a side view of a robot and a movable robot included in the robot system shown in FIG. 1;
FIG. 3 is a block diagram illustrating a function of a controller shown in FIG. 2;
FIG. 4 is a schematic perspective view of a work table shown in FIG. 1;
FIG. 5 is a perspective view of a jig shown in FIG. 4;
FIG. 6 is a flowchart of a procedure of a method for calibrating robot coordinates;
FIGs. 7A to 7D schematically illustrate a calibration procedure according to the first embodiment;
FIG. 8 is a schematic perspective view of a work table according to a second embodiment;
FIGs. 9A to 9D schematically illustrate a calibration procedure according to the second embodiment; and
FIGs. 10A to 10C schematically illustrate a calibration procedure according to a third embodiment.

### DESCRIPTION OF THE EMBODIMENTS

The embodiments will now be described with reference to the accompanying drawings, wherein like reference numerals designate corresponding or identical elements throughout the various drawings.

### (First Embodiment)

The robot system according to this embodiment is a system to calibrate a coordinate system (robot coordinate system) used to operate a robot. Exemplary applications of the robot system include, but are not limited to: work of teaching the robot (its position relative to the work table) before the system activates; and moving the robot relative to the work table. A possible example of the robot system according to this embodiment is a robot system to process a single part and a combination product of a plurality of parts, or a semi-finished product such as a workpiece (to-be-processed material). The to-be-processed material may be any articles subject to processing such as conveyance and fitting in robot systems. Examples of the to-be-processed material include, but are not limited to, parts such as bolts, substrate assemblies for electronic use, automobiles, and processed food.

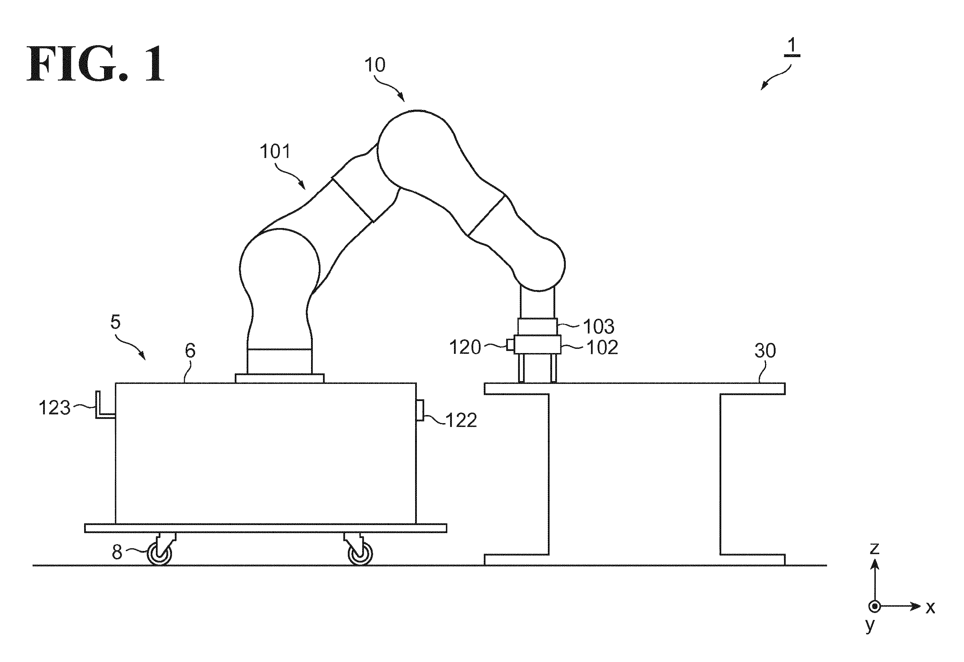

FIG. 1 is a schematic side view of a robot system 1 according to this embodiment. In FIG. 1, a height direction (vertical direction) is referred to as a z direction, and horizontal directions are referred to as an x direction and a y direction. As shown in FIG. 1, the robot system 1 according to this embodiment includes a robot 10 and a work table 30. The robot 10 is coupled to a movable robot 5. The movable robot 5 includes a carriage 6 and drive wheels 8. The carriage 6 supports the robot 10 and accommodates control-related devices. The carriage 6 accommodates, for example, a drive source (not shown) to drive the drive wheels 8 and a controller or another element to control operations of the robot 10 and the movable robot 5. The controller will be described later. The carriage 6 may be equipped with a plurality of sensors. In this embodiment, the carriage 6 is equipped with an obstacle sensor 122 to detect an obstacle in the travel direction. The carriage 6 is also provided with an antenna 123 and other elements to provide wireless communication for information necessary in control. The movable robot 5 is capable of moving in an x-y direction by the drive of the drive wheels 8. Also, the movable robot 5 is capable of stopping itself immediately before the work table 30 using the obstacle sensor 122.

The robot 10 includes a robot arm 101. To the distal end of the robot arm 101, a tool 102 is mounted. The tool 102 is capable of holding a to-be-processed material or another object. The tool 102 is an end effector such as a hand. A plurality of sensors may be mounted to the distal end of the robot arm 101. In this embodiment, an inner force sensor 103 is disposed between the distal end of the robot arm 101 and the tool 102. The tool 102 includes a laser sensor 120 capable of measuring the distance to an object. Details of these sensors, including their operations, will be described later.

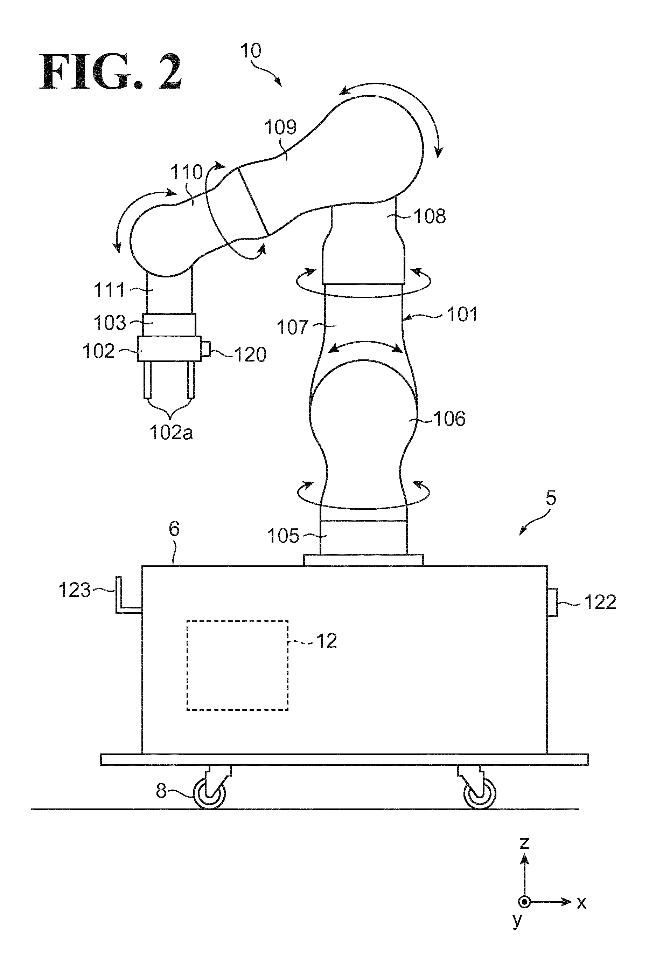

FIG. 2 is a side view of the robot 10 and the movable robot 5, illustrating the robot 10 and the movable robot 5 in detail. As shown in FIG. 2, the robot 10 includes a base 105 and the robot arm 101. The base 105 is mounted to the carriage 6. The robot arm 101 extends upward from the base 105.

The robot arm 101 is made up of six arms coupled to each other, namely, a first arm 106, a second arm 107, a third arm 108, a fourth arm 109, a fifth arm 110, and a sixth arm 111, in the order from the base end (base 105) side. Each of these arms accommodates an actuator to drive the arm into rotation as indicated by the two-headed arrows shown in FIG. 2 at joints where the arms are coupled to each other.

At the distal end of the robot arm 101, the tool 102 is disposed. The tool 102 is driven into rotation by the actuator accommodated in the sixth arm 111, which is at the distal end of the robot arm 101. In this embodiment, the tool 102 employs a hand capable of holding a to-be-processed material. In the tool 102, an actuator is disposed to drive a pair of holding claws 102a, which are mounted to the distal end of the tool 102. Examples of the holding claws 102a are two rectangular-parallelepiped shapes with holding planes opposed to each other to hold the to-be-processed material. As will be described later, the tool 102 has two planes orthogonal to the holding planes and orthogonal to each other.

Between the tool 102 and the sixth arm 111, which is at the distal end of the robot arm 101, the inner force sensor 103 is disposed. The inner force sensor 103 is what is called a 6-axis inner force sensor, which is capable of simultaneously detecting a total of six components, namely, force components in translational three axial directions to act on a detection portion and moment components about rotational three axes.

The carriage 6 accommodates a controller (control device) 12 to control operations of the robot 10 and the movable robot 5. An example of the controller 12 is a computer including an arithmetic operation device, a storage device, and an input-output device. The controller 12 outputs operation command to control the operation of the robot 10. Specifically, the controller 12 is coupled to the actuators of the robot 10 through the cable harness 13, and drives the actuators using the operation command, thus controlling the operation of the robot 10. Under the control of the controller 12, the robot 10 operates the first arm 106, the second arm 107, the third arm 108, the fourth arm 109, the fifth arm 110, the sixth arm 111, the tool 102, and the holding claws 102a. The controller 12 is also coupled to the inner force sensor 103 and the laser sensor 120 through the cable harness, and thus is capable of detecting the state of the tool 102.

The operation command that the controller 12 outputs is a command to activate a program that operates the robot 10 or a combination job of commands to activate programs that operate the robot 10. For example, a command to hold the to-be-processed material on the holding claws 102a, a command to press the tool 102 against a predetermined position, and other commands are set in advance as the operation command.

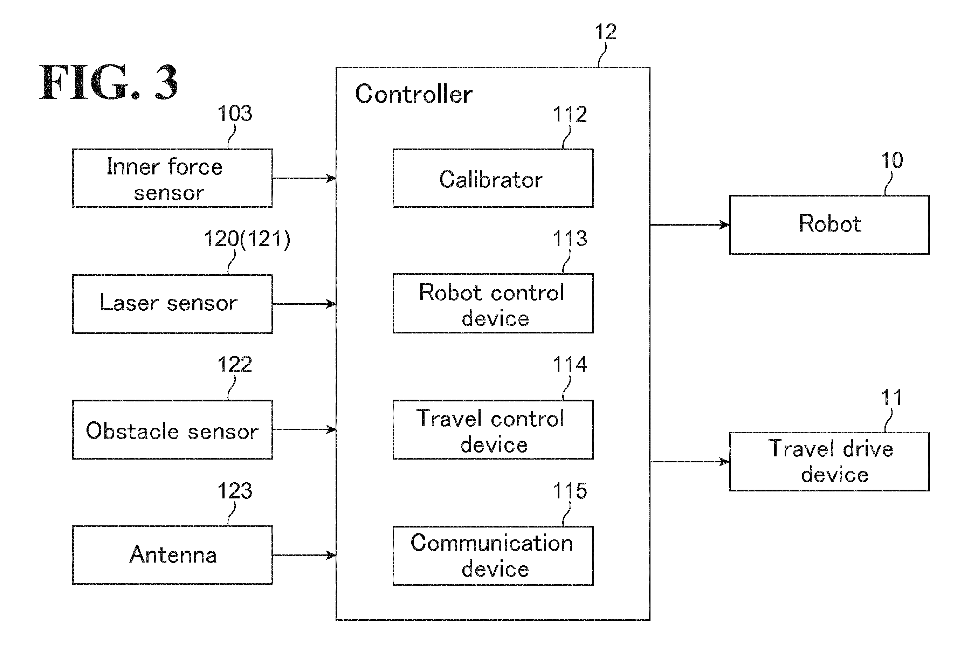

A function of the controller 12 will be described by referring to FIG. 3. FIG. 3 is a block diagram of a function of the controller 12. As shown in FIG. 3, the controller 12 is coupled to the inner force sensor 103, the laser sensor 120, an obstacle sensor 122, and an antenna 123. The controller 12 includes a calibrator (detector, calibration device) 112, a robot control device 113, a travel control device 114, and a communication device 115.

The robot control device 113 controls the robot 10 using robot coordinates. Before the operation of processing the to-be-processed material, the robot control device 113 presses the tool 102 against a calibration jig or a work table 30 so as to control the robot 10 to perform a calibration operation. The calibration operation is an operation of calibrating the origin of the coordinate system of the robot 10. With pressing control, the robot control device 113 effects a plane-to-plane contact to fix the posture and position of the robot 10. In this manner, the robot control device 113 determines the position of the robot 10. The pressing control may be implemented using the inner force sensor 103, for example.

The calibrator 112 inputs the position of the tool 102 detected using the inner force sensor 103 or the laser sensor 120. For example, the calibrator 112 calculates a line of action of force from the force and moment detected by the inner force sensor 103, and derives as a contact position an intersection point between the line of action of the force and the surface of the robot 10 or another element. The calibrator 112 inputs as a reference position a contact position of, for example, the tool 102 that has performed a calibration operation. Then, the calibrator 112 calculates the amounts of displacement between the position at the teaching time and the reference position. The amounts of displacement that the calibrator 112 calculates include, for example, the amounts of displacement in the x, y, and z directions, and the amounts of displacement in the directions of rotation about the x axis, about the y axis, and about the z axis. Then, the calibrator 112 uses the amounts of displacement to calibrate the position of the origin at teaching time. In this manner, the calibrator 112 calibrates the robot coordinates that the robot 10 uses. Specifically, in accordance with the reference position, the calibrator 112 changes the coordinate system that the robot uses.

The travel control device 114 controls the operation of the movable robot 5. The travel control device 114 is movable along a travel path taught in advance. Also, the travel control device 114 detects the position of the work table 30 based on the output of the obstacle sensor 122, and controls a travel drive device 11 to stop the movable robot 5 at a work position immediately before the work table 30. The travel drive device 11 is accommodated, for example, in the carriage 6 to control the drive wheels 8.

The communication device 115 is capable of receiving information for the drive control of the robot 10 or the movable robot 5 through the antenna 123. The communication device 115 stores the received information in a recording medium included in the controller 12. As necessary, the robot control device 113 refers to the recording medium to use the information acquired through communication.

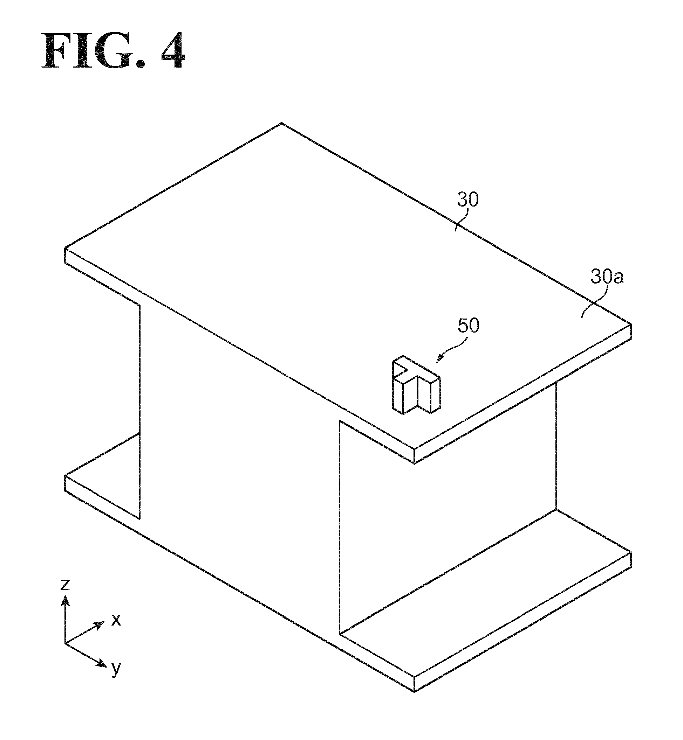

Next, the work table 30 shown in FIG. 1 will be described in detail. FIG. 4 is a perspective view of the work table 30. As shown in FIG. 4, the work table 30 has a work surface 30a on which the robot 10 places the to-be-processed material to work on the to-be-processed material. The work surface 30a is a plane along the x-y direction. To the work surface 30a, a calibration jig 50 is mounted.

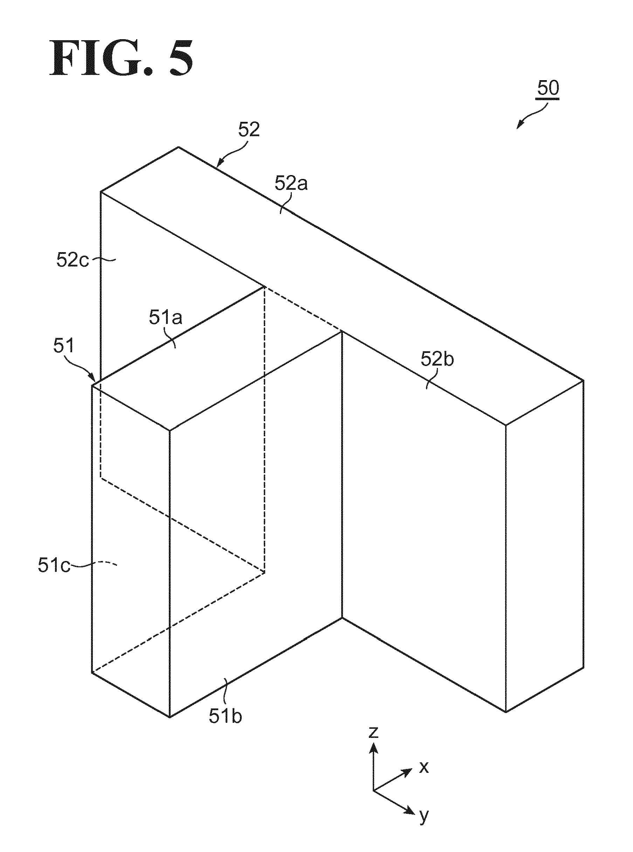

FIG. 5 is a perspective view of the calibration jig 50. As shown in FIG. 5, the jig 50 has a plurality of planes. The jig 50 has an approximate T-shape when viewed from the z direction. This shape enables the tool 102 to hold the jig 50. For example, the jig 50 includes a rectangular parallelepiped first member 51 and a rectangular parallelepiped second member 52, with the first member being upright on the main surface of the second member 52. The first member 51 has an upper surface 51a and side surfaces 51b and 51c. The upper surface 51a is along the x-y direction. The side surfaces 51b and 51c are parallel to each other along an x-z direction and face each other. The upper surface 51a is a surface against which a lower surface 102d of the tool 102 is pressed. The side surfaces 51b and 51c are surfaces that are held by two holding planes of the tool 102 in such a manner that the side surfaces 51b and 51c are pressed against by the two holding planes of the tool 102. The second member 52 has an upper surface 52a and side surfaces 52b and 52c. The upper surface 52a is along the x-y direction. The side surfaces 52b and 52c are along a y-z direction. The upper surface 51a of the first member 51 and the upper surface 52a of the second member 52 constitute the same plane.

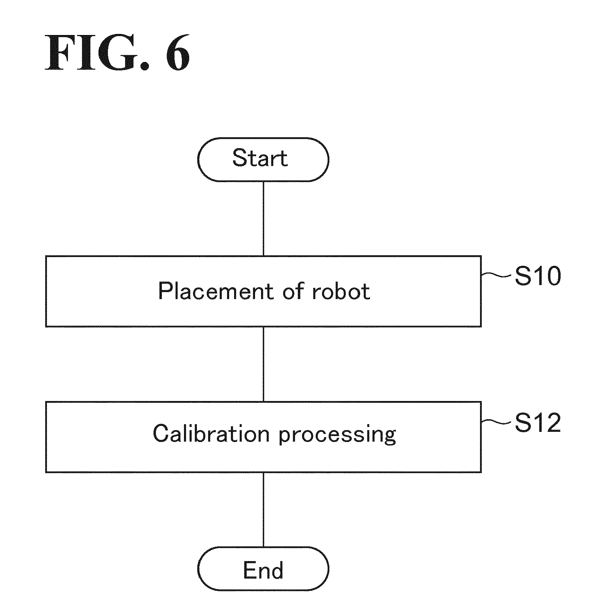

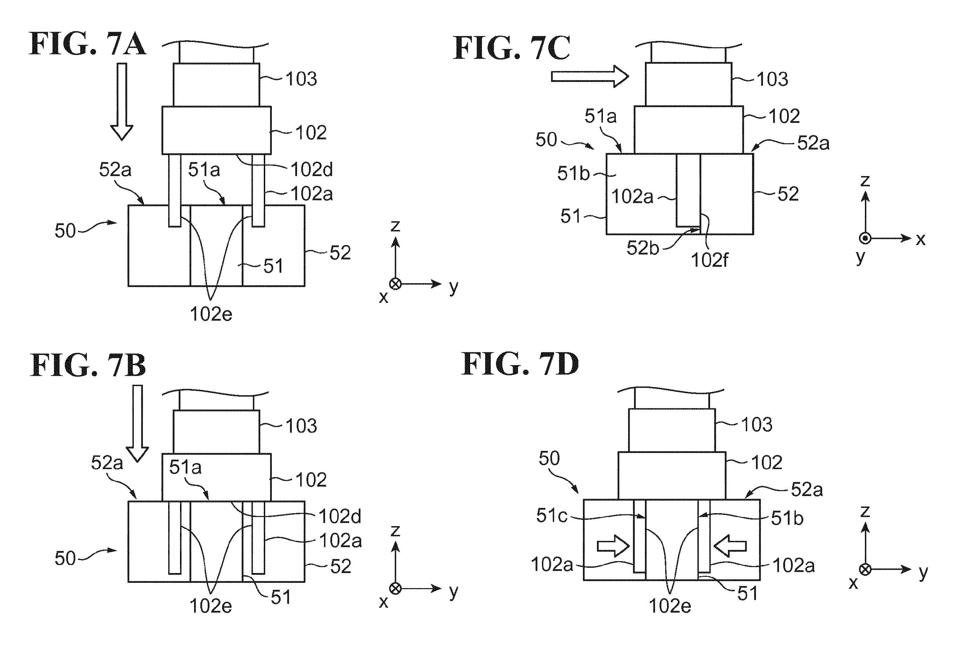

Next, a calibration method of the robot system 1 will be described by referring to FIGs. 6 and 7A to 7D. FIG. 6 is a flowchart of operation of the calibration method. FIGS. 7A to 7D illustrate the calibration method. In this embodiment, a hand is employed as the tool 102.

As shown in FIG. 6, first, the robot 10 is placed relative to the work table 30 (S10). In the processing at S10, for example, the movable robot 5 moves the robot 10 to a position in front of the work table 30. When the robot 10 reaches the position in front of the work table 30, the processing proceeds to the calibration processing (detection step, calibration step) (S12).

In the processing at S12, the calibrator 112 identifies the posture and position of the robot 10 to perform calibration processing. As shown in FIG. 7A, the tool 102 has two holding planes 102e and a lower surface 102d. The two holding planes 102e face each other to enable the tool 102 to hold the to-be-processed material. The lower surface 102d is a plane orthogonal to the two holding planes 102e. First, the robot control device 113 moves the tool 102 to the placement position of the jig 50. The placement position of the jig 50 is taught in advance as, for example, teaching data. The robot control device 113 stops the tool 102 above the first member 51 and moves the tool 102 downward along the z direction. As a result, as shown in FIG. 7B, the lower surface 102d of the tool 102 is brought into contact with the upper surfaces 51a and 52a of the jig 50. Here, an actuator provided in the robot arm 101 is driven into activation to press the lower surface 102d of the tool 102 against the upper surfaces 51a and 52a of the jig 50 by force control. In other words, the lower surface 102d of the tool 102 and the upper surfaces 51a and 52a of the jig 50 are made to hit each other. Thus, the jig 50 and the tool 102 are brought into contact with each other on their surfaces that are along the x-y direction, and in this manner, a reference position of z is determined.

Next, as shown in FIG. 7C, the robot control device 113 moves the robot arm 101 in the x direction. As shown in FIG. 7C, the tool 102 has a side surface 102f. The side surface 102f is a plane orthogonal to the two holding planes 102e and the lower surface 102d. The side surface 102f serves as a side surface of the rectangular-parallelepiped holding claw102a. The robot control device 113 brings the side surface 102f of the holding claw 102a into contact with the side surface 52b of the jig 50. Here, the actuator provided in the robot arm 101 is driven into activation to press the holding claw 102a against the upper surfaces 51a and 52a of the jig 50 by force control. In other words, the holding claw 102a and the upper surfaces 51a and 52a of the jig 50 are made to hit each other. Thus, the jig 50 and the tool 102 are brought into contact with each other on their surfaces that are along the y-z direction, and in this manner, a reference position of x is determined. This operation also brings the tool 102 into contact with surfaces that are along the x-y direction and the y-z direction. As a result, a posture about the y axis is also determined.

Next, as shown in FIG. 7D, the robot control device 113 controls the holding claws 102a to hold the first member 51 of the jig 50. The robot control device 113 controls the holding planes 102e of the holding claws 102a to sandwich the side surfaces 51b and 51c of the jig 50 and to bring the holding planes 102e (first plane or second plane) of the holding claws 102a and the side surface 52b of the jig 50 into contact with each other. Here, the actuator provided in the robot arm 101 is driven into activation to implement the holding by force control. Thus, the jig 50 and the tool 102 are brought into contact with each other on two surfaces that are along the z-x direction, and in this manner, a reference position of y is determined. This operation also determines a posture about the x axis and a posture about the z axis.

The calibrator 112 calibrates the robot coordinates (original position) based on the reference positions of x, y, and z and the reference postures about the x axis, about the y axis, and about the z axis. At the end of the processing at S12, the control processing shown in FIG. 6 ends.

The control processing shown in FIG. 6 ensures accurate and simple calibration processing of the robot 10 without dependency on sensor performance and on the environment. It is possible to perform the control processing shown in FIG. 6 as an offline operation prior to processing of the to-be-processed material. Thus, after the calibration processing, the robot 10 processes and produces the to-be-processed material (processing step).

In the robot system 1 and the calibration method according to the first embodiment, the tool 102 has the holding planes 102e, the lower surface 102d (first plane or second plane), and the side surface 102f. The holding plane 102e, the lower surface 102d, and the side surface 102f (first plane or second plane) are orthogonal to each other. The jig 50 has the side surfaces 51b and 51c (third plane or fourth plane) and two planes 51a (52a) and 52b (fifth plane or sixth plane). The side surfaces 51b and 51c are parallel to each other to be held by the tool 102. The two planes 51a (52a) and 52b are orthogonal to the side surfaces 51b and 51c, and are orthogonal to each other. This configuration ensures that by bringing the tool 102 and the jig 50 into contact with each other on the x-y plane, the y-z plane, and the z-x plane, the reference positions are determined. This ensures a stable calibration while eliminating the need for an image sensor or a similar element and eliminating adverse effects caused by changes in illumination in the environment.

### (Second Embodiment)

The robot system, the calibration method, and the method for producing a to-be-processed material according to the second embodiment are approximately similar to the robot system, the calibration method, and the method for producing a to-be-processed material according to the first embodiment. The second embodiment is different from the first embodiment in the shape of the tool 102, in the shape of the calibration jig, and in that that calibration is performed using the laser sensor 120. The following description will be focused on the different respects, eliminating description of those matters recited in the first embodiment.

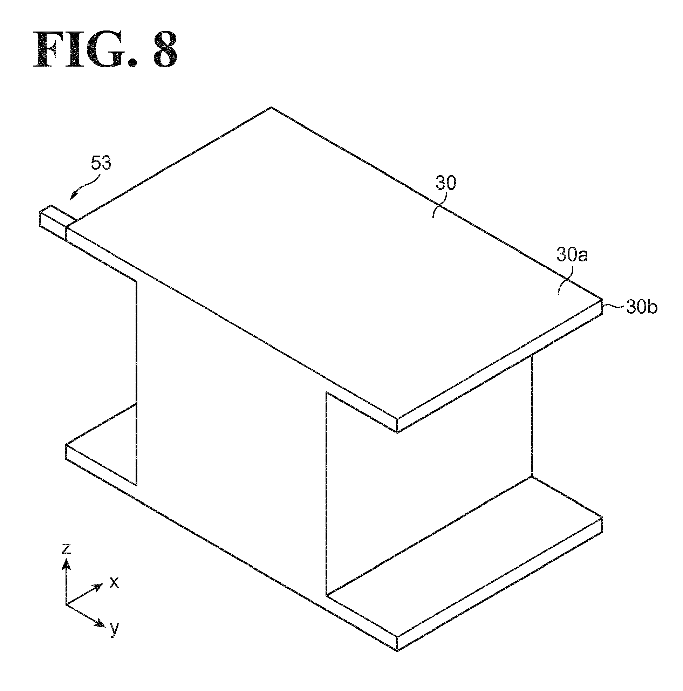

FIG. 8 shows a work table 30 used in the robot system according to this embodiment. On the upper surface of the work table 30, a work surface 30a is formed. The outer edge of the upper end portion of the work table 30 extends outwardly beyond the support base. A side surface 30b of the upper end portion of the work table 30 is formed along the z-x plane. To the side surface 30b, a jig 53 is mounted. The jig 53 has, for example, a rectangular-parallelepiped shape. The jig 53 may not necessarily have a rectangular-parallelepiped shape insofar as the jig 53 has a reflection plane along the y-z direction.

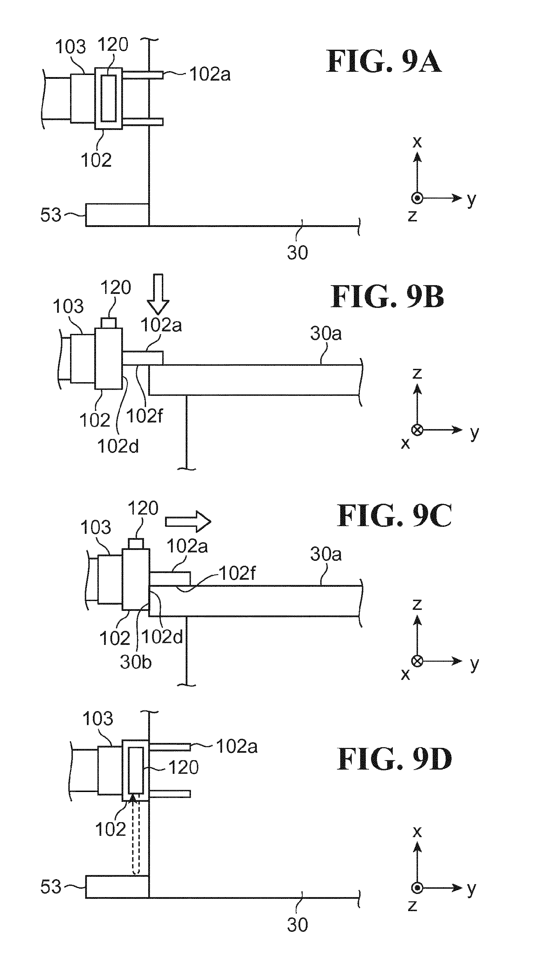

FIGs. 9A to 9D schematically illustrate calibration processing according to a second embodiment. In the second embodiment, the shape of the tool 102 may not necessarily be a hand shape insofar as the tool 102 has two planes orthogonal to each other. For ease of description and understanding, the hand of the first embodiment will be used in the following description. As described in the first embodiment, the tool 102 includes the lower surface 102d and the side surface 102f of the holding claw 102a. The lower surface 102d and the side surface 102f (first plane or second plane) are two planes orthogonal to each other.

As shown in FIG. 9A, first, the robot control device 113 moves the tool 102 to the outer edge of the work table 30 where the jig 53 is placed. The placement position of the jig 53 is taught in advance, for example, as teaching data. The robot control device 113 stops the tool 102 above the outer edge of the work table 30 and moves the tool 102 downward along the z direction. As a result, as shown in FIG. 9B, the side surface 102f of the tool 102 is brought into contact with the work surface 30a. Here, an actuator provided in the robot arm 101 is driven into activation to press the side surface 102f of the tool 102 against the work surface 30a by force control. In other words, the side surface 102f of the tool 102 and the work surface 30a are made to hit each other. Thus, the work table 30 and the tool 102 are brought into contact with each other on surfaces that are along the x-y direction, and in this manner, a reference position of z is determined. At the same time, a posture about the y axis is also determined.

Next, as shown in FIG. 9C, the robot control device 113 moves the robot arm 101 in the y direction. In this manner, the robot control device 113 brings the lower surface 102d into contact with the side surface 30b of the work table 30. Here, the actuator provided in the robot arm 101 is driven into activation to press the lower surface 102d against the side surface 30b of the work table 30 by force control. In other words, the lower surface 102d and the side surface 30b of the work table 30 are made to hit each other. Thus, the work table 30 and the tool 102 are brought into contact with each other on surfaces that are along a z-x direction, and in this manner, a reference position of y is determined. At the same time, a posture about the x axis and a posture about the z axis are also determined.

Next, as shown in FIG. 9D, now that the reference position of z, the reference position of y, the posture about the x axis, the posture about the y axis, and the posture about the z axis are fixed, the calibrator 112 determines a reference position of x using the laser sensor 120. The laser sensor 120 is mounted to the tool 102 in such a manner that the laser sensor 120 is capable of outputting laser light along the x direction. The laser sensor 120 emits laser light to the y-z plane of the jig 53 and detects a reflection of the laser light so as to measure a distance. The calibrator 112 determines the distance output from the laser sensor 120 as the reference position of x.

In the robot system 1 and the calibration method according to the second embodiment, the tool 102 has the lower surface 102d and the side surface 102f, which are planes orthogonal to each other. The work table 30 has the work surface 30a and the side surface 30b, and the jig 53 has a plane along the y-z plane. This configuration ensures that by bringing the tool 102 and the work table 30 into contact with each other on the y-z plane and the z-x plane, the reference positions are determined. The position in the x direction can be detected by the laser sensor 120. This ensures a stable calibration while eliminating the need for an image sensor or a similar element and eliminating adverse effects caused by changes in illumination in the environment.

### (Third Embodiment)

The robot system, the calibration method, and the method for producing a to-be-processed material according to the third embodiment are approximately similar to the robot system, the calibration method, and the method for producing a to-be-processed material according to the second embodiment. The third embodiment is different from the second embodiment in that the tool 102 is a hand. The following description will be focused on the different respects, eliminating description of those matters recited in the first embodiment and the second embodiment.

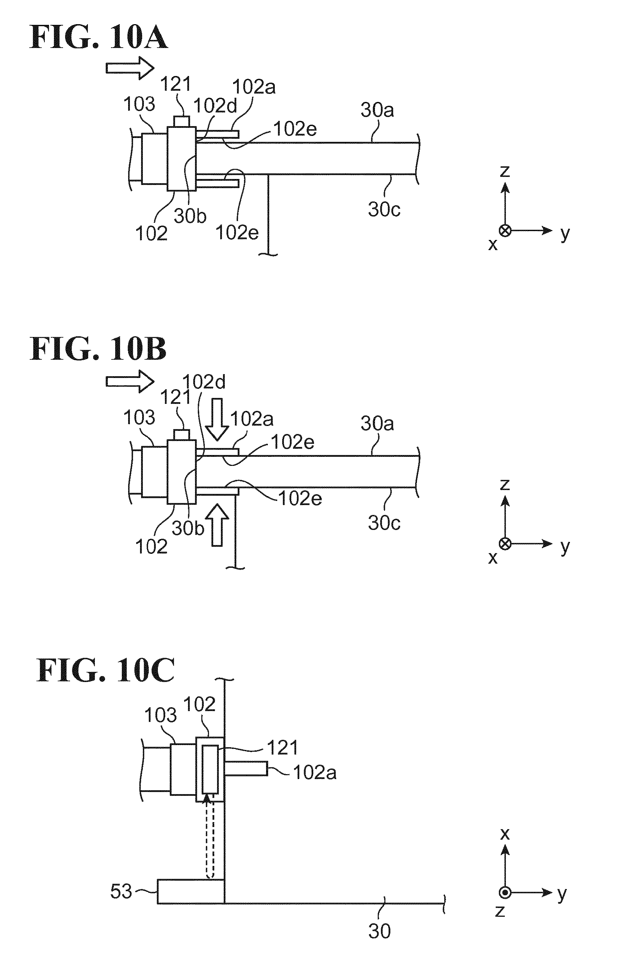

FIGs. 10A to 10C schematically illustrate calibration processing according to the third embodiment. In the third embodiment, the tool 102 has a hand shape. As described in the first embodiment, the tool 102 has the holding planes 102e and the lower surface 102d. The holding plane 102e and the lower surface 102d (first plane or second plane) are two planes orthogonal to each other.

As shown in FIG. 10A, the robot control device 113 moves the tool 102 to the outer edge of the work table 30 where the jig 53 is placed. The placement position of the jig 50 is taught in advance, for example, as teaching data. The robot control device 113 stops the tool 102 at a height identical to the height of the outer edge of the work table 30, moves the tool 102 along the y direction, and brings the lower surface 102d of the tool 102 into contact with the side surface 30b of the work table 30. Here, the actuator provided in the robot arm 101 is driven into activation to press the lower surface 102d of the tool 102 against the side surface 30b of the work table 30 by force control. In other words, the lower surface 102d of the tool 102 and the side surface 30b of the work table 30 are made to hit each other. Thus, the work table 30 and the tool 102 are brought into contact with each other on surfaces that are along the z-x direction, and in this manner, a reference position of y is determined. At the same time, a posture about the z axis is also determined.

Next, as shown in FIG 10B, the robot control device 113 controls the holding claws 102a to hold the work table 30. The robot control device 113 controls the holding claws 102a to sandwich the work surface 30a and the lower surface 30c of the work table 30 between the holding planes 102e of the holding claws 102a. Thus, the holding planes 102e of the holding claws 102a are brought into contact with the work surface 30a and the lower surface 30c of the work table 30. Here, the actuator provided in the robot arm 101 is driven into activation to implement the holding by force control. Thus, the work table 30 and the tool 102 are brought into contact with each other on two surfaces that are along the x-y direction, and in this manner, a reference position of z is determined. This operation also determines a posture about the x axis and a posture about the y axis.

Next, as shown in FIG. 10C, now that the reference position of z, the reference position of y, the posture about the x axis, the posture about the y axis, and the posture about the z axis are fixed, the calibrator 112 determines a reference position of x using the laser sensor 121. The laser sensor 121 is mounted to the tool 102 in such a manner that the laser sensor 121 is capable of outputting laser light along the x direction. The laser sensor 121 emits laser light to the y-z plane of the jig 53 and detects a reflection of the laser light so as to measure a distance. The calibrator 112 determines the distance output from the laser sensor 121 as the reference position of x.

In the robot system 1 and the calibration method according to the third embodiment, the tool 102 has the holding planes 102e and the lower surface 102d, which are planes orthogonal to each other. The work table 30 has the work surface 30a and the side surface 30b, and the jig 50 has a plane along the y-z plane. This configuration ensures that by bringing the tool 102 and the work table 30 into contact with each other on the y-z plane and the x-y plane, the reference positions are determined. The position in the x direction can be detected by the laser sensor 120. This ensures a stable calibration while eliminating the need for an image sensor or a similar element and eliminating adverse effects caused by changes in illumination in the environment.

Obviously, numerous modifications and variations of the present disclosure are possible in light of the above teachings. It is therefore to be understood that within the scope of the appended claims, the present disclosure may be practiced otherwise than as specifically described herein.

For example, the holding planes 102e of the tool 102 each may have depressions and protrusions insofar as an imaginary plane is ensured (such as by positioning the tops of the protrusions at the same height). Other planes that are not described in relation to the tool 102 and the jigs 50 and 53 may not necessarily be planes.

Also, the robot system may include the tool 102 with two planes but may not include the laser sensor 121. The tool 102 with at least two planes ensures obtaining at least the reference position of z, the reference position of y, the posture about the x axis, the posture about the y axis, and the posture about the z axis. This will find applications in a simple calibration and in checking of occurrence of an amount of displacement.
- 1: Robot system
- 10: Robot
- 112: Calibrator (detection device, calibration device)
- 113: Robot control device (control device)

## Claims

1. A robot system 1, **characterized by**:
a robot 10;
a tool 102 mounted to a distal end of the robot 10 and comprising a first plane and a second plane orthogonal to each other;
a control device 113 configured to control the robot 10;
a work table 30 on which the robot 10 is configured to work;
a calibration jig 50, 53 fixed to the work table 30;
a detector 112 configured to detect a reference position determined by pressing the first plane and the second plane of the tool 102 against at least one of the jig 50, 53 and the work table 30; and
a calibrator 112 configured to calibrate, based on the reference position, coordinates of the robot 10 to be used by the control device 113.

2. The robot system 1 according to claim 1,
wherein the tool 102 further comprises two holding planes 102e respectively orthogonal to the first plane and the second plane of the tool 102, the two holding planes 102e being opposed to each other to hold a to-be-processed material, and
wherein the jig 50, 53 comprises
a third plane and a fourth plane parallel to each other to be held by the tool 102, and
a fifth plane and a sixth plane orthogonal to the third plane and the fourth plane and orthogonal to each other.

3. The robot system 1 according to claim 1 or 2, further comprising a laser sensor 121 configured to measure a distance between the reference position and the jig 50, 53,
wherein based on the reference position and the distance, the calibrator 112 is configured to calibrate the coordinates of the robot 10 to be used by the control device 113.

4. The robot system according to any one of claims 1 to 3, wherein the calibrator 112 is configured to calibrate positions in directions of three mutually orthogonal axes and calibrate postures about the three axes.

5. The robot system according to any one of claims 1 to 4, further comprising an inner force sensor 103 disposed between the distal end of the robot 10 and the jig 50, 53.

6. The robot system 1 according to any one of claims 1 to 5, further comprising a carriage 6 on which the robot 10 is supported.

7. A calibration method for calibrating coordinates of a robot 10 operated by a control device 113, the robot 10 comprising a tool 102 mounted to a distal end of the robot 10, the tool 102 comprising two planes orthogonal to each other, and
the calibration method comprising:
detecting a reference position determined by pressing the two planes of the tool 102 against at least one of a work table 30 and a calibration jig 50, 53 fixed to the work table 30; and
based on the reference position, calibrating the coordinates of the robot 10 to be used by the control device 113.

8. A method for producing a to-be-processed material to be processed on a work table 30 by a robot 10 operated by a control device 113,
wherein the robot 10 comprises a tool 102 mounted to a distal end of the robot 10 and comprising two planes orthogonal to each other,
wherein a calibration jig 50, 53 is fixed to the work table 30, and
wherein the method comprises
detecting a reference position determined by pressing the two planes of the tool 102 against at least one of the jig 50, 53 and the work table 30,
based on the reference position, calibrating coordinates of the robot 10 to be used by the control device 113, and
processing the to-be-processed material using the calibrated coordinates of the robot 10.
